# EUROPEAN PATENT APPLICATION

(11) **EP 1 550 825 A2**
(43) Date of publication of application: **06.07.2005**
(21) Application number: 04029692.3
(22) Date of filing: 15.12.2004
(51) Int. Cl.: F16N 31/00

(54) **Lubricant draining device**

(30) Priority: 18.12.2003 JP 2003421194
(71) Applicant: FANUC LTD, Minamitsuru-gun, Yamanashi 401-0597 (JP)
(72) Inventor: Okada, Takeshi, Room 10-306, Minamitsuru-gun Yamanashi 401-0511 (JP); Jinushi, Munehiro, Room 14-507, Minamitsuru-gun Yamanashi 401-0511 (JP); Kurebayashi, Hidenori, Minamitsuru-gun Yamanashi 401-0511 (JP)
(74) Representative: Schmidt, Steffen J., Dipl.-Ing.

(57) **Abstract**

A lubricant draining device for draining a lubricant from a closed mechanical section (20) provided in a machine structure such as a robot, a machine tool and an injection molding machine. The lubricant draining device includes a wall (24) defining the mechanical section, the wall including a drain port (26) communicated with an interior space of the mechanical section while permitting a lubricant to flow therethrough; a tube (28) connected at a proximal end (42) thereof to the drain port and permitting a lubricant to flow therethrough; a blocking member (30) blocking a flow of lubricant through the tube in a releasable manner; and a retaining section (32) retaining the tube at a location adjacent to the wall with the tube being kept connecting with the drain port. The retaining section may include a chamber (46), provided on the wall (24), for accommodating the tube (28) in its entirety with the tube being removable from the chamber. The chamber may be provided with a detachable cover (50).

## Description

### BACKGROUND OF THE INVENTION

### 1. Field of the Invention

The present invention relates to a lubricant draining device.

### 2. Description of the Related Art

In a machine structure, such as a robot, a machine tool or an injection molding machine, a mechanical section including relatively movable mechanical parts is usually supplied with a lubricant, such as grease or oil. Especially, in a mechanical section formed in a closed space, such as a reduction mechanism, a wall defining the mechanical section is provided with a pouring port for pouring a new lubricant into the interior space of the mechanical section and a drain port for draining an old degraded lubricant from the interior space of the mechanical section.

In the closed mechanical section as described above, at the time when a lubricant is exchanged or replenished, a grease gun or other tool is used to pour a new lubricant into the interior space of the mechanical section through the pouring port under pressure. An old degraded lubricant in the mechanical section is ejected through the drain port in such a mariner as to be pushed out by the new lubricant poured into the mechanical section. Whether or not the mechanical section is fully filled with the new lubricant can be judged by observing a change in the color of the lubricant discharged through the drain port. In other words, at an instant when the color of the discharged lubricant is changed from a degraded color to a fresh color, an operator can judge that the lubricant has been completely exchanged to new one, and thereby can stop pouring the new lubricant into the mechanical section and close the drain port with a plug.

In the lubricant exchanging operation as described above, the old lubricant pushed out through the drain port flows down or flows out. The flowing-down lubricant may soil the machine structure or a floor surface on which the machine structure is placed. Therefore, after the lubricant exchanging operation is completed, it is generally required to wipe off the old lubricant drained from the mechanical section by a hand work. If the wiping off of the drained lubricant is omitted, several disadvantages may be caused such that an object to be handled by the machine structure, such as a workpiece or a product, is soiled by the lubricant, or that the floor surface on which the machine structure is placed becomes slippery and thereby the safety of the environment is impaired. Indeed, various peripheral devices, jigs, wires, pipes, and so on, are often disposed around the machine structure and, therefore, it is generally difficult for the operator to wipe off the drained lubricant by hand work.

### SUMMARY OF THE INVENTION

It is an object of the present invention to provide a lubricant draining device in which, when a lubricant supplied to the mechanical section of a machine structure is exchanged or replenished, it is possible to simplify or eliminate a subsequent work, such as a cleaning, which would normally be conducted after a lubricant exchanging operation.

To accomplish the above object, the present invention provides a lubricant draining device for draining a lubricant from a closed mechanical section provided in a machine structure such as a robot, a machine tool and an injection molding machine, comprising a wall defining the mechanical section, the wall including a drain port communicated with an interior space of the mechanical section while permitting a lubricant to flow therethrough; a tube connected at a proximal end thereof to the drain port and permitting a lubricant to flow therethrough; a blocking member blocking a flow of a lubricant through the tube in a releasable manner; and a retaining section retaining the tube at a location adjacent to the wall with the tube being kept connecting with the drain port.

In the above lubricant draining device, the retaining section may comprise a chamber, provided on the wall, for accommodating the tube in its entirety with the tube being removable from the chamber.

In this arrangement, the chamber may be provided with a detachable cover.

Alternatively, the chamber may be provided with a cover including an aperture for locally opening the chamber, and the tube may be provided at a distal end thereof with a flange capable of being fitted in the aperture of the cover.

The retaining section may also comprise a member, provided on the wall, for anchoring the tube with the tube being removable from the member.

The blocking member may comprise a plug detachably attached to a distal end of the tube.

Alternatively, the blocking member may comprise a squeezing member for restorably deforming a distal end of the tube.

Alternatively, the blocking member may comprise a valve arranged at a distal end of the tube.

The tube may is flexible.

### BRIEF DESCRIPTION OF THE DRAWINGS

The above and other objects, features and advantages of the present invention will become more apparent from the following description of preferred embodiments in connection with the accompanying drawings, wherein:
Fig. 1 is a perspective view schematically showing a joint section of a robot, to which a lubricant draining device according to the first embodiment of the present invention is applied;
Fig. 2 is a perspective view schematically showing the lubricant draining device of Fig. 1 with a cover removed;
Fig. 3 is a sectional view schematically showing the robot joint section of Fig. 1;
Fig. 4 is a perspective view schematically illustrating a lubricant exchanging operation performed in the lubricant draining device of Fig. 1;
Fig. 5 is a sectional view schematically showing the robot joint section during the lubricant exchanging operation of Fig. 4;
Fig. 6 is a perspective view schematically showing a joint section of a robot, to which a lubricant draining device according to the second embodiment of the present invention is applied;
Fig. 7 is a sectional view schematically showing the robot joint section of in Fig. 6;
Fig. 8 is a perspective view schematically illustrating a lubricant exchanging operation performed using the lubricant draining device of Fig. 6;
Fig. 9 is a perspective view schematically showing a joint section of a robot, to which a lubricant draining device according to the third embodiment of the present invention is applied;
Fig. 10 is a view showing the lubricant draining device of Fig. 9, with a tube therein omitted to simplify an explanation;
Fig. 11 is a perspective view schematically showing a joint section of a robot, to which a lubricant draining device according to the fourth embodiment of the present invention is applied;
Fig. 12 is a view showing the lubricant draining device of Fig. 11, with a tube therein omitted to simplify an explanation;
Fig. 13 is a perspective view schematically showing an example of a tube blocking member;
Fig. 14 is a perspective view schematically showing another example of a tube blocking member; and
Fig. 15 is a perspective view schematically showing a further example of a tube blocking member.

### DETAILED DESCRIPTION

The embodiments of the present invention are described below in detail, with reference to the accompanying drawings. In the drawings, the same or similar components are denoted by common reference numerals.

In each of the illustrated embodiments, a lubricant draining device according to the present invention is provided for a reduction mechanism incorporated in a joint section of a robot. The present invention exhibits a significant utility in various mechanical structures, especially in a robot, a machine tool and an injection molding machine, for the purpose of exchanging or replenishing a lubricant in connection with a closed mechanical section including relatively movable mechanical parts.

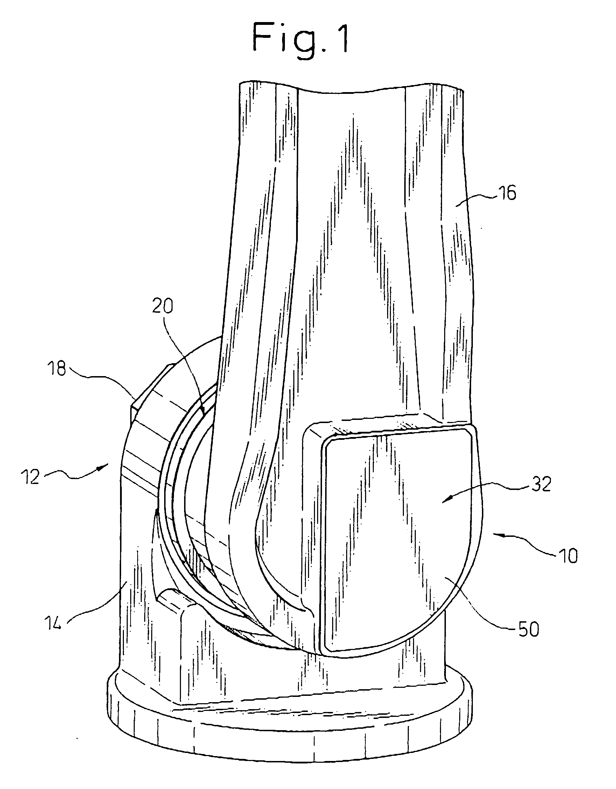

Referring to the drawings, Figs. 1 to 3 respectively show a lubricant draining device 10, according to the first embodiment of the present invention, and a robot joint section 12 in which the lubricant draining device 10 is arranged.

In the robot joint section 12 as illustrated, a robot base 14 is provided with an electric motor 18 and a reduction mechanism 20, used for driving an arm 16. An output shaft of the electric motor 18 is connected to an input shaft of the reduction mechanism 20. The arm 16 is attached to an output shaft of the reduction mechanism 20, and thus is driven by a rotary power of the electric motor 18 with its speed reduced through the reduction mechanism 20.

The reduction mechanism 20 includes mechanical parts built therein, such as an internal gear, an external gear, a cam, and so on, and these mechanical parts are mutually engaged with each other to be relatively movable. The mechanical parts of the reduction mechanism 20 are received in a space defined by the robot base 14, the arm 16, the electric motor 18 and a casing 22, so that the reduction mechanism 20 constitutes a closed mechanical section.

The lubricant draining device 10, according to the first embodiment of the present invention, is configured to drain a lubricant from the reduction mechanism 20, and includes a wall 24 defining the reduction mechanism 20 and including a drain port 26 communicated with an interior space of the reduction mechanism 20 while permitting a lubricant to flow therethrough, a tube 28 connected at a proximal end thereof to the drain port 26 and permitting a lubricant to flow therethrough, a blocking member 30 blocking a flow of a lubricant through the tube 28 in a releasable manner, and a retaining section 32 retaining the tube 28 at a location adjacent to the wall 24 with the tube 28 being kept connecting with the drain port 26.

The wall 24 defining the reduction mechanism 20 is provided at one end of the arm 16, and the drain port 26 for draining the lubricant from the reduction mechanism 20 is formed above the center axis 20a of the reduction mechanism 20 so as to penetrate through the wall 24. On the other hand, an end wall 34 of the robot base 14, which is another wall defining the reduction mechanism 20, is provided with a pouring port 36 for supplying the lubricant to the reduction mechanism 20, the pouring port 36 being formed under the center axis 20a of the reduction mechanism 20 (or just beneath the electric motor 18) so as to penetrate through the end wall 34. A nipple 38 is attached to the pouring port 36.

The tube 28 is preferably flexible in its entirety, and is provided with a lubricant passage 40 communicated with the interior space of the reduction mechanism 20 through the pouring port 36. The tube 28 is connected at one end (or a proximal end) thereof to the drain port 26 through a joint 42. At another end (or a distal end) of the tube 28, a stopper or plug (as described later), constituting the blocking member 30, is detachably attached thereto through a joint 44, so as to close the lubricant passage 40 in an openable manner.

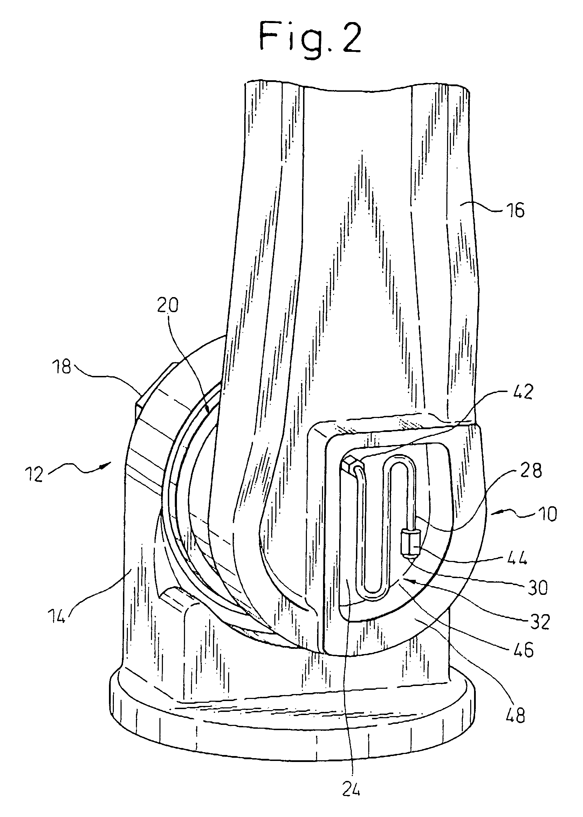

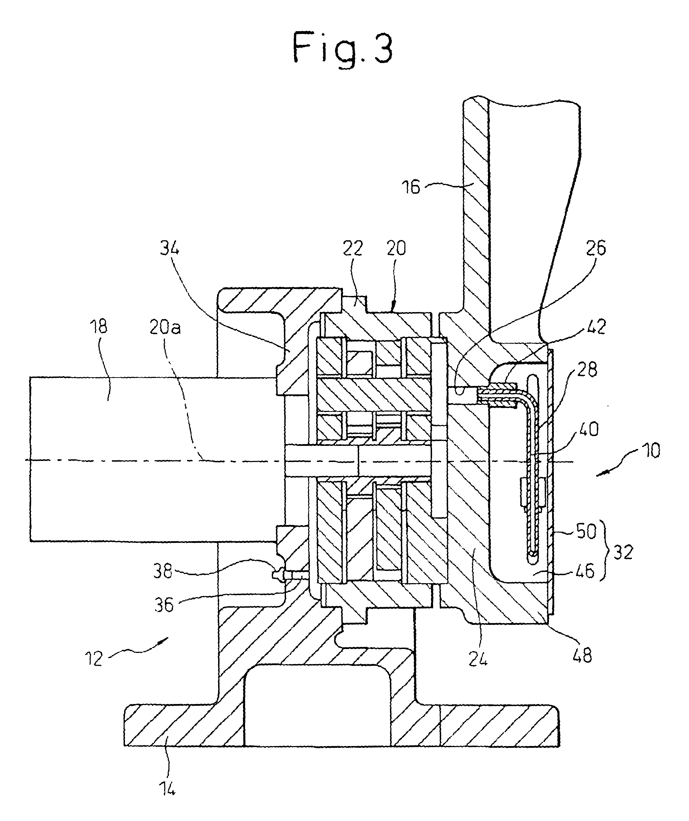

The retaining section 32 includes a chamber 46, provided on the wall 24, for accommodating the tube 28 in its entirety in such a manner as to allow the tube 28 to be taken out of or removed from the chamber 46. The chamber 46 is formed inside an annular wall portion 48 protruding from the outer surface of the wall 24 at a side opposite to the reduction mechanism 20. The chamber 46 is provided with a detachable cover 50. The cover 50 is usually secured to the outer end face 48a of the annular wall portion 48 by bolts or magnets (not shown) to close the chamber 46 and, when the lubricant should be exchanged or replenished as described later, is detached from the annular wall portion 48 to open the chamber 46. The tube 28 is usually bent or folded in an appropriate fashion to be accommodated in the chamber 46 (Fig. 2), and is hidden by the cover 50 attached to the annular wall portion 48 so as not to be visible from the outside thereof (Figs. 1 and 3).

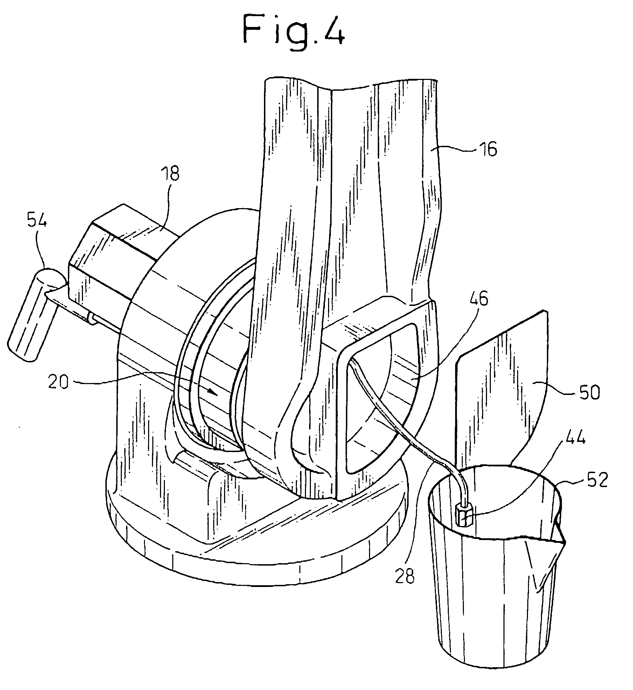

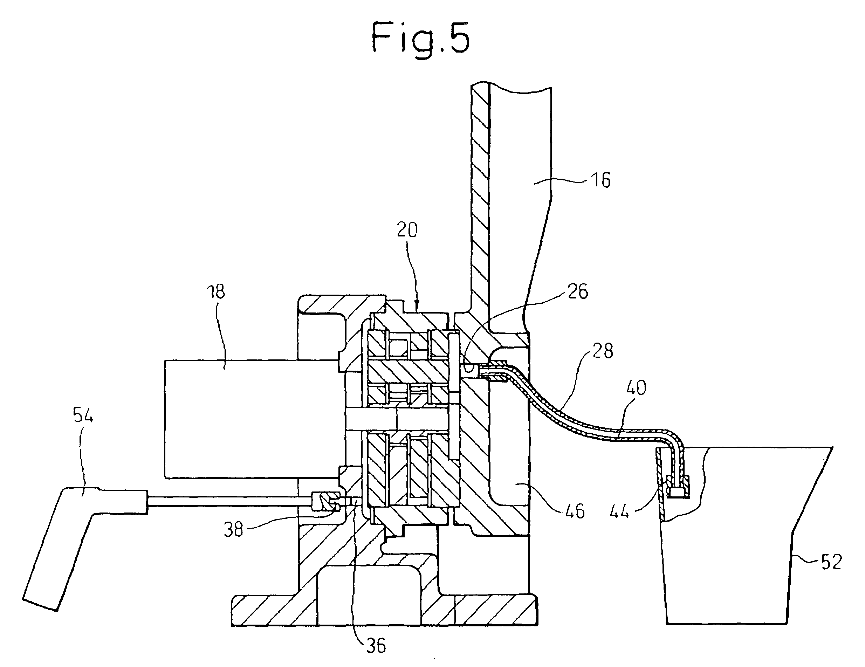

In the above configuration, at the time when the lubricant is to be exchanged or replenished, for the reduction mechanism 20, a collecting container 52 is provided, as shown in Figs. 4 and 5, and the cover 50 is detached so as to permit the tube 28 to be drawn out of the chamber 46. Then, the distal end (i.e., the joint 44) of the tube 28 extending outside the chamber 46 is introduced into the collecting container 52, and in this state, the blocking member 30 (Fig. 2) is detached from the joint 44. After that, a grease gun 54 is connected to the grease nipple 38, and is operated to supply a new lubricant into the interior space of the reduction mechanism 20 through the pouring port 36.

When the new lubricant is poured into the reduction mechanism 20 under pressure by the grease gun 54, an old degraded lubricant in the reduction mechanism 20 is ejected from the end opening of the tube 28 through the drain port 26 and the passage 40, in such a manner as to be pushed out by the new lubricant, and is stored in the collecting container 52. At this time, a change in the color of the lubricant discharged from the end opening of the tube 28 is observed. Then, at an instant when the color of the discharged lubricant is changed from a degraded color to a fresh color, an operator judges that the lubricant has been completely exchanged to new one, and thereby stops pouring the new lubricant and closes the end opening of the tube 28 again by the blocking member 30. After that, the tube 28 is accommodated in the chamber 46, the cover 50 is attached, and thereby the exchanging operation of the lubricant is completed.

As described above, in the lubricant draining device 10, it is possible to readily and surely collect or store the lubricant drained from the reduction mechanism 20 in the collecting container 52 by using the tube 28. Accordingly, it is possible to prevent the robot, or the floor on which the robot is placed, from being soiled, and thus to significantly simplify or eliminate subsequent work, such as cleaning, which would, otherwise, be conducted after the lubricant exchanging operation.

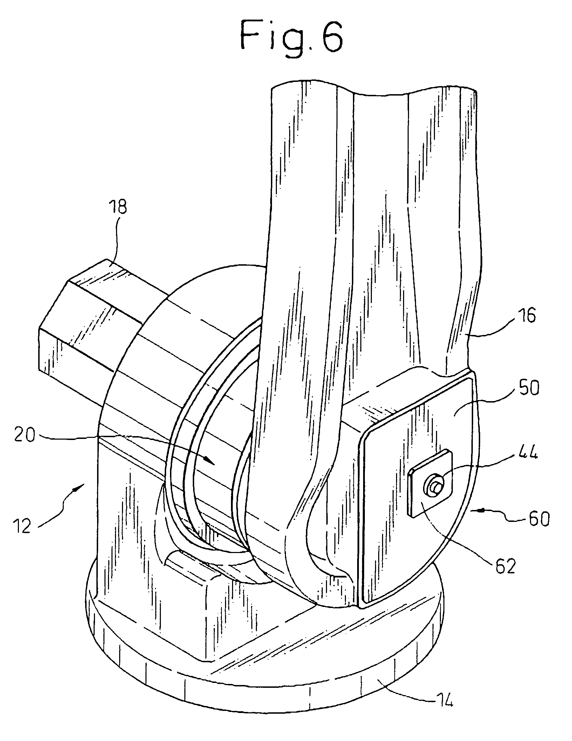

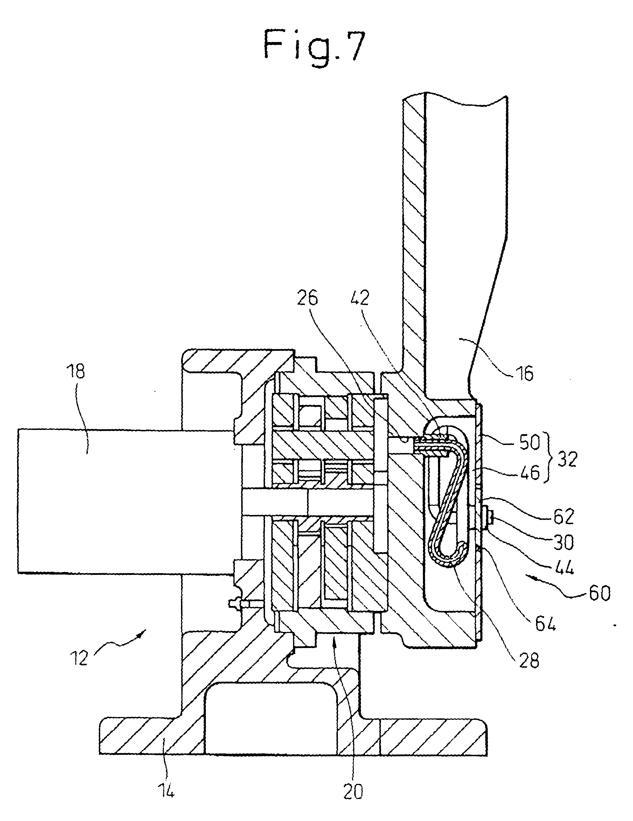

Figs. 6 and 7 show a lubricant draining device 60, according to the second embodiment of the present invention, and a robot joint section 12 in which the lubricant draining device 60 is arranged. The configuration of the lubricant draining device 60 of the second embodiment is substantially the same as that of the lubricant draining device 10 of the first embodiment described above, except for the constitutions of a joint 44 attached to the distal end of a tube 28 as well as of a cover 50 in a retaining section 32. Accordingly, corresponding components are denoted by common reference numerals, and the descriptions thereof are not repeated.

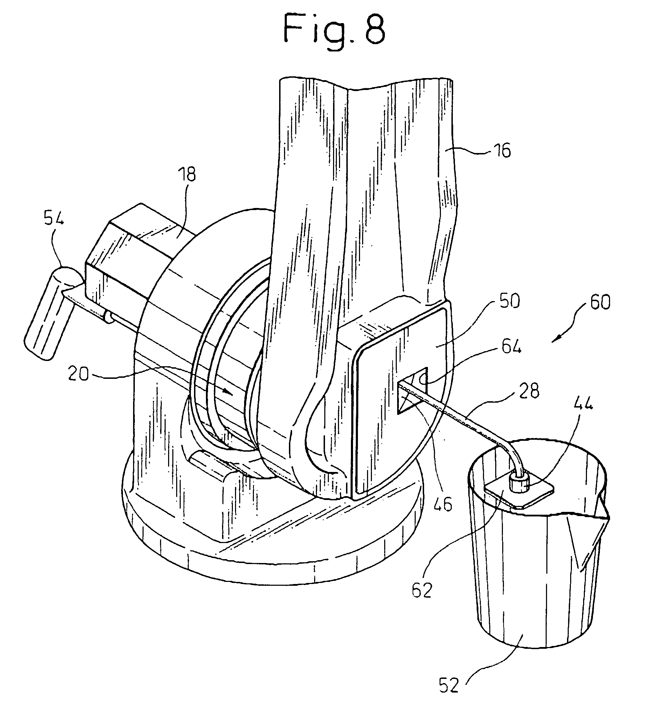

In the lubricant draining device 60, the joint 44 attached to the distal end of the tube 28 includes a flat-plate like rectangular flange 62. The cover 50 of the chamber 46 includes an aperture 64, formed at a desired position to penetrate through the cover 50, into which the flange 62 is detachably fitted (Fig. 7). In a state where the flange 62 of the joint 44 is not fitted in the aperture 64 on the cover 50, the aperture 64 locally opens the chamber 46 (Fig. 8).

At the time when the lubricant is to be exchanged or replenished for the reduction mechanism 20, in the second embodiment, the joint 44 is detached from the cover 50, as shown in Fig. 8, and the tube 28 is drawn out from the chamber 46 through the aperture 64. Then, the distal end (i.e., the joint 44) of the tube 28 is introduced into the collecting container 52, and in this state, the blocking member 30 (Fig. 7) is detached. After that, a new lubricant is poured into the interior space of the reduction mechanism 20 by using a grease gun 54 in the same manner as the first embodiment. Thus, an old degraded lubricant is drained from the end opening of the tube 28, and is stored in the collecting container 52. At an instant when the color of the drained lubricant is changed from a degraded color to a fresh color, an operator stops pouring the new lubricant and closes the end opening of the tube 28 again by the blocking member 30. After that, the tube 28 is accommodated in the chamber 46, the flange 62 of the joint 44 is fitted into the aperture 64 of the cover 50, and thereby the exchanging operation of the lubricant is completed.

As will be understood from the above, the lubricant draining device 60 can also possess remarkable effects equivalent to those in the lubricant draining device 10 described above. Especially, in the lubricant draining device 60, there is no need to attach or detach the cover 50 in the retaining section 32 when the lubricant is exchanged or replenished, so that the operation becomes easy in comparison with the lubricant draining device 10.

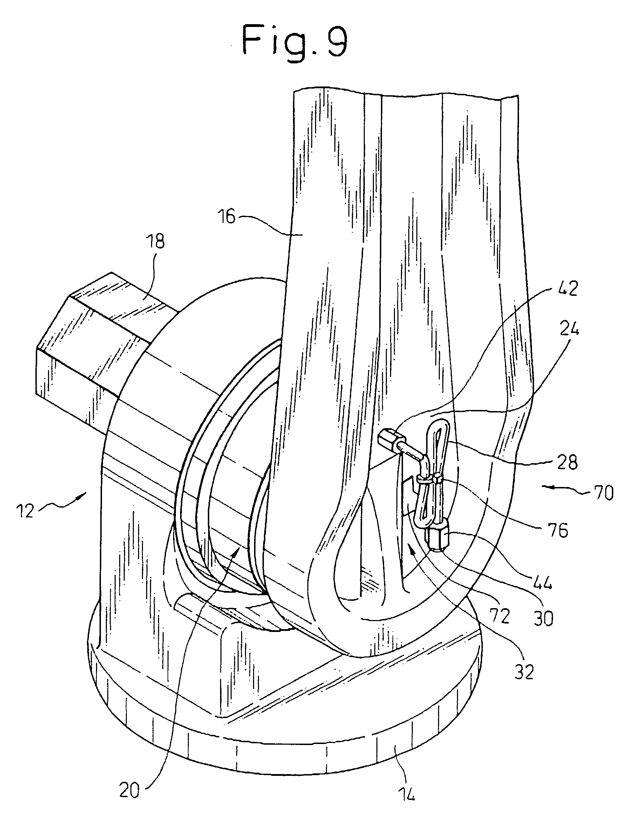

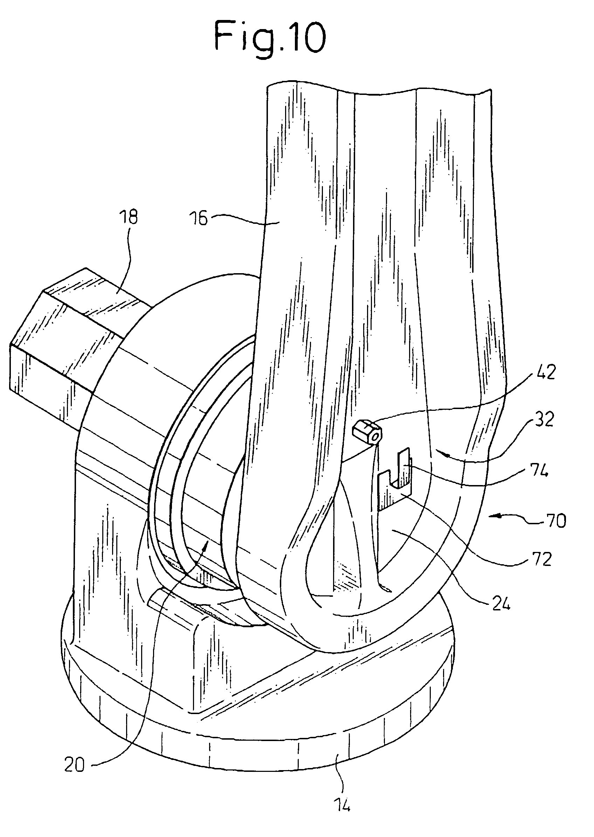

Figs. 9 and 10 show a lubricant draining device 70, according to the third embodiment of the present invention, and a robot joint section 12 in which the lubricant draining device 70 is arranged. The configuration of the lubricant draining device 70 of the third embodiment is substantially the same as that of the lubricant draining device 10 of the first embodiment described above, except for the constitution of a retaining section 32 for retaining a tube 28. Accordingly, corresponding components are denoted by common reference numerals, and the descriptions thereof are not repeated.

In the lubricant draining device 70, the retaining section 32 includes an anchoring member 72, provided on the wall 24 of an arm 16, for anchoring the tube 28 in such a manner as to allow the tube 28 to be detached or removed from the anchoring member 72. The anchoring member 72 is composed of a hook-shaped member fixed to the outer surface of the wall 24 at a side opposite to a reduction mechanism 20. More specifically, as shown in Fig. 10, the anchoring member 72 includes a hook 74 arranged in close proximity to a joint 42 (or a drain port 26 shown in Fig. 3). The tube 28 is usually bent or folded in an appropriate fashion to be bundled preferably by a band 76, and is anchored in this condition on the hook 74 of the anchoring member 72 by using, e.g., the band 76 (Fig. 9). In this embodiment, the tube 28 is always exposed.

At the time when the lubricant is to be exchanged or replenished for the reduction mechanism 20, in the third embodiment, the band 76 is removed as occasion demands, and the tube 28 is detached from the anchoring member 72 to permit the tube 28 to be drawn out of the arm 16. Then, the distal end (i.e., the joint 44) of the tube 28 extending outward of the arm 16 is introduced into the collecting container 52 (Fig. 4), and in this state, the blocking member 30 is detached. Then, in the same manner as the first embodiment, the lubricant is exchanged or replenished. At an instant when the color of the lubricant drained from the tube 28 is changed from a degraded color to a fresh color, an operator stops pouring the new lubricant and closes the end opening of the tube 28 again by the blocking member 30. After that, the tube 28 is bundled and anchored onto the anchoring member 72 by optionally using the band 76, and thereby the exchanging operation of the lubricant is completed.

As will be understood from the above, the lubricant draining device 70 can also possess remarkable effects equivalent to those in the lubricant draining device 10 described above. Especially, in the lubricant draining device 70, there is no need to attach or detach the cover 50 (Fig. 1) in the retaining section 32 when the lubricant is exchanged or replenished, so that the operation becomes easy in comparison with the lubricant draining device 10.

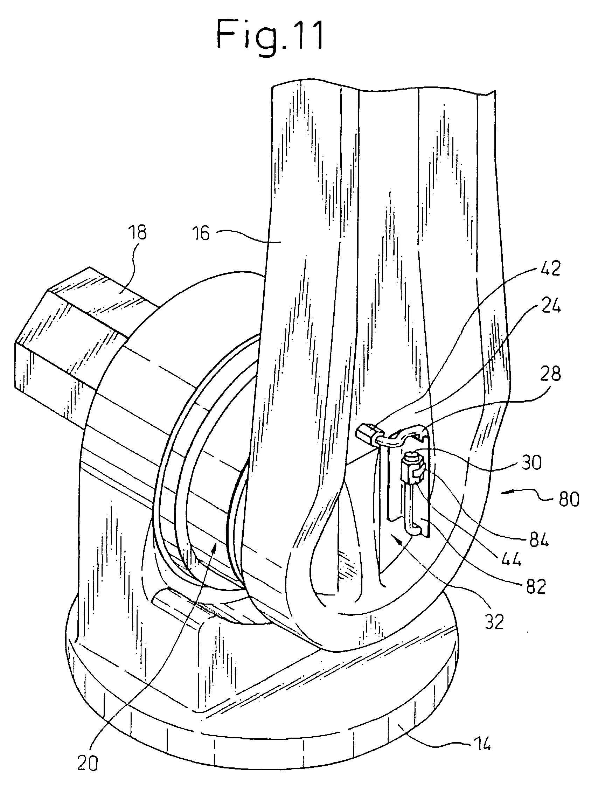

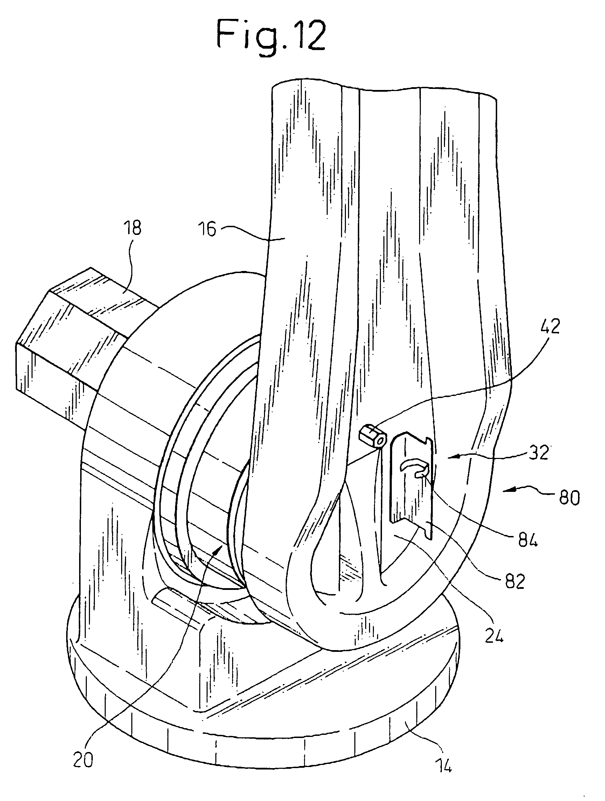

Figs. 11 and 12 show a lubricant draining device 80, according to the fourth embodiment of the present invention, and a robot joint section 12 in which the lubricant draining device 80 is arranged. The configuration of the lubricant draining device 80 of the forth embodiment is substantially the same as that of the lubricant draining device 70 of the third embodiment described above, except for the constitution of an anchoring member in a retaining section 32. Accordingly, corresponding components are denoted by common reference numerals, and the descriptions thereof are not repeated.

The anchoring member 82 of the lubricant draining device 80 is composed of a holder-shaped member fixed to the outer surface of a wall 24 at a side opposite to a reduction mechanism 20. More specifically, as shown in Fig. 12, the anchoring member 82 includes a holder 84 arranged in close proximity to a joint 42 (or a drain port 26 shown in Fig. 3). The holder 84 is engaged due to a spring function thereof with a joint 44 attached to the distal end of the tub 28 to hold the joint 44. The tube 28 is usually held in a tight condition by, e.g., winding it around the anchoring member 82, and is anchored in this condition on the anchoring member 82 by engaging the joint 44 at the distal end of the tube 28 with the holder 84.

At the time when the lubricant is to be exchanged or replenished for the reduction mechanism 20, in the fourth embodiment, the joint 44 is detached from the holder 84 and thus the tube 28 is separated from the anchoring member 82 to permit the tube 28 to be drawn out of the arm 16. The operation subsequent thereto is the same as that of the third embodiment. In the lubricant draining device 80, remarkable effects equivalent to those in the lubricant draining device 70 described above can also be obtained.

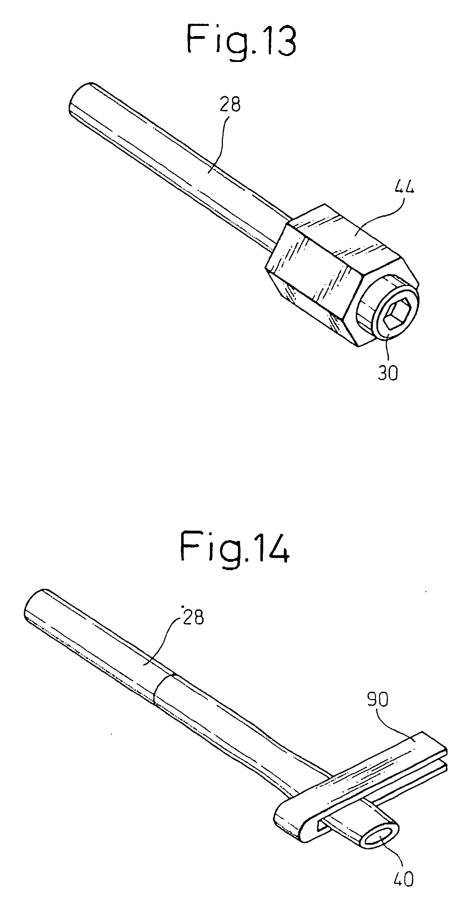

Fig. 13 shows, in an enlarged manner, the configuration of the distal end of the tube 28 in each of the embodiments described above. The joint 44 is attached to the distal end of the tube 28, and the blocking member 30 formed from a stopper or plug is detachably attached to the end of the joint 44.

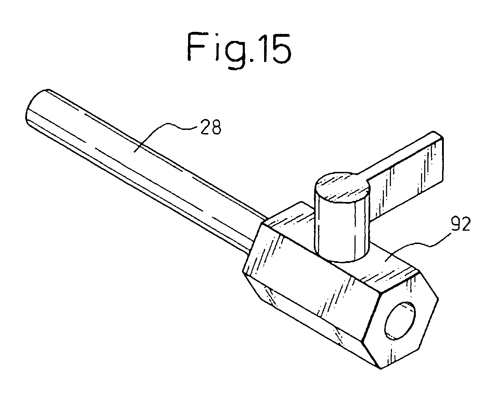

The other blocking member may be used in each embodiment. For example, as shown in Fig. 14, in the case where the tube 28 is made of a sufficiently elastic material at, at least, the distal end length thereof, a squeezing member 90, such as a clip, may be used for restorably deforming the distal end of the tube 28, so as to close the passage 40 of the tube 28. Alternatively, as shown in Fig. 15, a valve 92 may be arranged at the distal end of the tube 28, so as to permit the passage of the tube 28 to be opened or closed by operating the valve 92.

While the invention has been described with reference to specific preferred embodiments, it will be understood by those skilled in the art that various changes and modifications may be made thereto without departing from the spirit and scope of the following claims.

## Claims

1. A lubricant draining device (10, 60, 70, 80) for draining a lubricant from a closed mechanical section (20) provided in a machine structure such as a robot, a machine tool and an injection molding machine, **characterized in that** the lubricant draining device comprises:
a wall (24) defining the mechanical section, said wall including a drain port (26) communicated with an interior space of the mechanical section while permitting a lubricant to flow therethrough;
a tube (28) connected at a proximal end (42) thereof to said drain port and permitting a lubricant to flow therethrough;
a blocking member (30) blocking a flow of a lubricant through said tube in a releasable manner; and
a retaining section (32) retaining said tube at a location adjacent to said wall with said tube being kept connecting with said drain port.

2. A lubricant draining device as set forth in claim 1, wherein said retaining section comprises a chamber (46), provided on said wall, for accommodating said tube in its entirety with said tube being removable from said chamber.

3. A lubricant draining device as set forth in claim 2, wherein said chamber is provided with a detachable cover (50).

4. A lubricant draining device as set forth in claim 2, wherein said chamber is provided with a cover (50) including an aperture (64) for locally opening said chamber, and wherein said tube is provided at a distal end thereof with a flange (62) capable of being fitted in said aperture of said cover.

5. A lubricant draining device as set forth in claim 1, wherein said retaining section comprises a member (72, 82), provided on said wall, for anchoring said tube with said tube being removable from said member.

6. A lubricant draining device as set forth in claim 1, wherein said blocking member comprises a plug (30) detachably attached to a distal end of said tube.

7. A lubricant draining device as set forth in claim 1, wherein said blocking member comprises a squeezing member (90) for restorably deforming a distal end of said tube.

8. A lubricant draining device as set forth in claim 1, wherein said blocking member comprises a valve (92) arranged at a distal end of said tube.

9. A lubricant draining device as set forth in any one of claims 1 to 8, wherein said tube is flexible.
